# EUROPEAN PATENT APPLICATION

(11) **EP 4 790 577 A1**
(43) Date of publication of application: **12.08.2026**
(21) Application number: 25157088.3
(22) Date of filing: 11.02.2025
(51) Int. Cl.: G06F 21/57, G06F 21/64, H04L 9/32

(54) **METHOD AND SYSTEM FOR MAKING POWER ORIGIN LABELING TRUSTWORTHY AND VERIFIABLE**

(71) Applicant: ABB SCHWEIZ AG, 5400 Baden (CH)
(72) Inventor: KOHNHAEUSER, Florian, 64560 Riedstadt (DE); FINSTER, Soeren, 76139 Karlsruhe (DE); SCHLOEDER, Matthias, 69126 Heidelberg (DE); BISKOPING, Matthias, 69493 Hirschberg (DE)
(74) Representative: Maiwald GmbH

(57) **Abstract**

There is provided a method for enabling power origin labeling processing with increased security in an industrial context. The method comprises: providing, at a device configured to generate power origin labels, a hardware-protected storage for storing signing keys that are bound to the device and that are to be used by a power origin labeling algorithm for calculating the power origin labels; providing, at the device, a trusted execution environment, TEE, for the power origin labeling algorithm to be implemented and/or executed in the TEE; and providing, at the device, a remote attestation mechanism for an external party to verify the power origin labeling algorithm and/or the device.

## Description

### FIELD OF THE INVENTION

The invention relates to a method for enabling power origin labeling processing with increased security in an industrial context. The invention further relates to a computer-implemented method for securing power origin labeling processing in an industrial context. Moreover, the invention further relates to a device for generating power origin labels with increased security in an industrial context, to a data processing device, to a computer-readable medium, and to a computer program product.

### BACKGROUND

In an industrial context, the origin of energy data may be tracked and labeled. This enables generating power origin labels indicating the sources of energy that have been used for the manufacturing of a product, for example, a mix of renewable and non-renewable energy. While it may be specified the power tracking and labeling algorithms and processes, no security aspects are currently considered. However, ensuring the security and trustworthiness of the power origin labeling process is essential for its business value.

Without protection, an adversary can tamper with various parts of the power origin labeling process. For instance, an adversary may manipulate the power origin algorithm computing the actual power origin labels. This would allow an attacker to obtain a green-looking power origin label while producing goods using dirty energy sources, a trick that is also referred to as greenwashing. Even worse, an attacker may attempt to exfiltrate secrets, for example, identities and keys, from a benign device generating power origin labels. This would allow the attacker to impersonate the device and generate power origin labels with arbitrary content and without the need to manipulate any power input data or algorithms. Another issue comes from the fact that currently it is not enabled that power origin labels may be verifiable. Thus, external parties, for example, auditors, customers, or regulatory agencies, are unable to check the authenticity and correctness of the power origin labeling process. This means the power origin labeling process and the resulting label are black boxes that must be blindly trusted.

The above-described issues highlight the need for making the power origin labeling process secure and verifiable. Hence, in an industrial context, there is the problem of how to increase security and verifiability of a power origin labeling process.

Hence, there is room and need for improvement regarding the increase of security and verifiability of a power origin labeling process in an industrial context.

### SUMMARY

In view of the above, it is an object of the present disclosure to overcome at least part of the drawbacks available regarding the security and verifiability of a power origin labeling process in an industrial context.

Therefore, to address one or more of these drawbacks, there is provided, in a first aspect, a method for enabling power origin labeling processing with increased security in an industrial context. The method comprises providing, at a device configured to generate power origin labels, a hardware-protected storage for storing signing keys that are bound to the device and that are to be used by a power origin labeling algorithm for calculating the power origin labels. The method further comprises providing, at the device, a trusted execution environment (TEE) for the power origin labeling algorithm to be implemented and/or executed in the TEE. The method further comprises providing, at the device, a remote attestation mechanism for an external party to verify the power origin labeling algorithm and/or the device.

It should be noted that the method according to the first aspect may be understood as a method performed by a service provider or an application provider for example. The service provider or application provider provides a system or an infrastructure for storing the signing keys, for implementing and/or executing the power origin labeling algorithm and for verifying the power origin labeling algorithm and/or the device.

The method may be at least in parts computer-implemented.

By the expression "power origin labeling processing" it is meant, for example, that one or more power origin labels are determined or calculated. A power origin label may label an amount of power or energy with respect to its origin, wherein the origin is, for example, at least one of renewable energy and energy from fossil fuels (i.e. non-renewable energy). Hence, a power origin label may be associated with at least one of a product, a part of the product (for example one or more used starting materials, components or pre-products), and one or more processing steps for manufacturing or obtaining the product or the part of the product. The power origin label may be indicative of an amount of power or energy that was required for manufacturing of the product or for manufacturing of the part of the product or for executing the one or more processing steps. Additionally or alternatively, the power origin label may be indicative of a type of energy and/or of an energy mix that was required for manufacturing of the product or for manufacturing of the part of the product or for executing the one or more processing steps. For example, a share of renewable energy and a share of energy from fossil fuels may be indicated in the energy mix.

The device configured to generate power origin labels may be any device suitable for generating the power origin labels, for example one or more servers.

By the term "hardware-protected" it is meant, for example, that a certain hardware is used as a security measure, e.g., deterring attacks on certain assets like cryptographic keys. The certain hardware may be used, for example, in that it is physically implemented in a certain way and/or in that the certain hardware is facilitated by a certain software implementation (e.g., FPGA).

By the term "signing keys" it is meant, for example, cryptographic keys to produce a digital signature or message authentication code.

By the term "bound" it is meant, for example, that signing keys cannot be exfiltrated from the device. They may be (re)generated, stored, and used by the device to generate a digital signature, but they cannot be copied to or accessed by another device. This property is ensured by using hardware-protected storage.

By the expression that the power origin labeling algorithm uses the signing keys for calculating the power origin labels it is meant, for example, that the power origin labeling algorithm uses one or more signing keys for signing one or more calculation processes performed by the power origin labeling algorithm and/or for signing one or more results obtained from the one or more calculation processes and/or for signing one or more inputs to one or more calculation processes.

Moreover, the power origin labeling algorithm may be understood as being provided or implemented in the TEE. Thus, said in other words, any input to the power origin labeling algorithm from outside of the TEE may need to enter the TEE first, and any output from the power origin labeling algorithm that is intended for a destination outside the TEE has to exit the TEE first.

By the term "external party" it is meant, for example, at least one of a user, another device and another system. It shall be noted that the verification could also be performed by another device or system instead of a user, for example, enabling to automatically react upon integrity violations.

The method according to the first aspect is advantageous in several ways.

First, protecting the power origin labeling process, for example by the hardware-protected storage that comprises the signing keys and/or by implementing the power origin labeling algorithm in the TEE, ensures that the power origin labeling algorithm remains secure and untampered throughout its execution. This protection prevents any external entity from modifying or accessing the algorithm, and allows for maintaining the algorithm's integrity and confidentiality. Once set up, the power origin labeling process is immune to manipulation and an attacker can only halt its execution but cannot alter its operations. This also protects the secrets used in generating and protecting power origin labels, thereby preserving the authenticity and trustworthiness of the labels by facilitating a secure operation. Moreover, this feature protects the intellectual property of the power origin labeling algorithms, thereby creating a substantial barrier against competitors attempting to clone or replicate them. By securing the labeling process and ensuring its verifiability, this enhances the reliability and business value of the power origin labels, fostering greater trust among customers, auditors, and regulatory agencies.

Second, the secure verifiability, enabled by the remote attestation mechanism, ensures that auditors can establish trust in the power origin labelling process, knowing it has remained untampered with, which is a critical aspect for securing the origin labels themselves. Auditors are empowered to verify the accuracy and authenticity of the entire power origin labeling process. This verification capability can occur dynamically during operation, allowing audits to be conducted at any time and with flexible frequency. It enables auditors or third parties to confirm that the power origin labeling algorithm operates on the designated device, remains untampered, and executes on authorized hardware, thereby reinforcing trust in the integrity of the labeling process.

Third, there is provided a significant benefit by preventing greenwashing in power origin labeling. By ensuring the integrity and verifiability of energy data, it protects against deceptive practices that misrepresent products' environmental credentials. This transparency not only builds trust with consumers but also enhances the credibility of businesses committed to genuine sustainability efforts, positioning them favorably in competitive markets.

Fourth, it is demonstrated a strong commitment to sustainability. By adopting robust measures to secure and verify the origin of energy used in products, businesses showcase their dedication to transparent environmental practices. This proactive approach not only enhances credibility in the eyes of consumers, regulators, and stakeholders but also aligns with global efforts towards achieving sustainable development goals. It positions organizations as leaders in environmental responsibility, fostering a positive reputation and competitive advantage in markets increasingly prioritizing sustainability initiatives.

Fifth, customer trust and reputation, which are crucial business benefits, are enhanced. By ensuring the authenticity and transparency of energy origin labels, manufacturers bolster their credibility as trustworthy providers committed to sustainable practices. This builds stronger relationships with environmentally conscious consumers who value transparency and integrity in product sourcing. Moreover, a positive reputation for sustainability can attract new customers, differentiate the brand in competitive markets, and increase customer loyalty.

Sixth, it is enabled to ensure compliance with security standards and requirements, which offers significant business benefits. By adhering to established security protocols and regulations, manufacturers demonstrate their commitment to protecting sensitive energy origin data from tampering or misuse. This compliance enhances trust among customers, partners, and regulatory bodies, ensuring that the power origin labeling process meets rigorous security standards. Moreover, adherence to these standards mitigates risks associated with data breaches or fraudulent activities, protecting the company's reputation and minimizing potential legal and financial liabilities.

According to several examples of the present disclosure, the providing the hardware-protected storage for storing the signing keys may further comprise bounding the hardware-protected storage to the device.

Hence, only the device may access the hardware-protected storage, in particular may access data stored in the hardware-protected storage and/or may store data in the hardware-protected storage. Thus, security is further increased.

According to several examples of the present disclosure, the providing the hardware-protected storage for storing the signing keys may further comprise providing to the power origin labeling algorithm implemented in the TEE exclusive access to the signing keys.

By the term "exclusive" it is meant, for example, that only the power origin labeling algorithm may access the signing keys.

Hence, only the power origin labeling algorithm may access the signing keys, in particular may use and/or read the signing keys or (re)generate signing keys. Thus, security is further increased.

According to several examples of the present disclosure, the providing the hardware-protected storage for storing the signing keys may further comprise: providing the hardware-protected storage for further storing power origin labeling metadata that are to be used by the power origin labeling algorithm to prove a correct computation of the power origin labels; and providing to the power origin labeling algorithm implemented in the TEE exclusive access to the power origin labeling metadata.

By the term "power origin labeling metadata" it is meant, for example, additional or supplementary data to the amount of power or energy that is labeld by the power origin label with respect to its origin. For example, the power origin labeling metadata may be indicative of weather conditions, for example sunny or windy, that may allow to further verify and understand the origin of an amount of power or energy, for example energy obtained via a photovoltaic system or via a wind turbine.

By the term "exclusive" it is meant, for example, that only the power origin labeling algorithm may access the power origin labeling metadata.

Hence, reliability and trustworthiness of the power origin labels is further increased in that the usage of the power origin labeling metadata is secured and protected, for example in that only the power origin labeling algorithm may access, i.e. use and/or read, the power origin labeling metadata.

According to several examples of the present disclosure, the providing the remote attestation mechanism may comprise providing the remote attestation mechanism to measure, for verification of the power origin labeling algorithm, an integrity of a program code of the power origin labeling algorithm.

It should be noted that the remote attestation mechanism to measure the integrity of the program code of the power origin labeling algorithm may be realized by use of existing implementations of remote attestation. For example, by computing a cryptographic hash value over the program code and signing the cryptographic hash value as well as a nonce from the external party with a device-dependent signing key.

Hence, reliability, trustworthiness, security and protection of a verification process is further increased.

According to several examples of the present disclosure, the providing the remote attestation mechanism may comprise providing a result of the verification or of the measured integrity to be transmitted to the external party for comparing the result with an a priori known reference result.

Hence, reliability, trustworthiness, security and protection of a verification process is further increased.

According to a second aspect, there is provided a computer-implemented method for securing power origin labeling processing in an industrial context. The method comprises storing, at a hardware-protected storage provided at a device configured to generate power origin labels, signing keys that are bound to the device and that are to be used by a power origin labeling algorithm for calculating the power origin labels. The method comprises implementing and/or executing the power origin labeling algorithm in a trusted execution environment (TEE) provided at the device. The method comprises verifying the power origin labeling algorithm and/or the device by use of a remote attestation mechanism provided at the device.

It should be noted that the method according to the second aspect may be understood as a method performed by a service user or an application user, for example by the external party as mentioned in the method according to the first aspect. The service user or application user stores signing keys, implements and/or executes the power origin labeling algorithm and verifies the power origin labeling algorithm and/or the device.

It should further be noted that same terms and/or expressions used for defining the method according to the second aspect that are also used for defining the method according to the first aspect are to be understood in a same way.

The method according to the second aspect is advantageous in several ways.

First, protecting the power origin labeling process, for example by the hardware-protected storage that comprises the signing keys and/or by implementing the power origin labeling algorithm in the TEE, ensures that the power origin labeling algorithm remains secure and untampered throughout its execution. This protection prevents any external entity from modifying or accessing the algorithm, and allows for maintaining the algorithm's integrity and confidentiality. Once set up, the power origin labeling process is immune to manipulation and an attacker can only halt its execution but cannot alter its operations. This also protects the secrets used in generating and protecting power origin labels, thereby preserving the authenticity and trustworthiness of the labels by facilitating a secure operation. Moreover, this feature protects the intellectual property of the power origin labeling algorithms, thereby creating a substantial barrier against competitors attempting to clone or replicate them. By securing the labeling process and ensuring its verifiability, this enhances the reliability and business value of the power origin labels, fostering greater trust among customers, auditors, and regulatory agencies.

Second, the secure verifiability, enabled by the remote attestation mechanism, ensures that auditors can establish trust in the power origin labelling process, knowing it has remained untampered with, which is a critical aspect for securing the origin labels themselves. Auditors are empowered to verify the accuracy and authenticity of the entire power origin labeling process. This verification capability can occur dynamically during operation, allowing audits to be conducted at any time and with flexible frequency. It enables auditors or third parties to confirm that the power origin labeling algorithm operates on the designated device, remains untampered, and executes on authorized hardware, thereby reinforcing trust in the integrity of the labeling process.

Third, there is provided a significant benefit by preventing greenwashing in power origin labeling. By ensuring the integrity and verifiability of energy data, it protects against deceptive practices that misrepresent products' environmental credentials. This transparency not only builds trust with consumers but also enhances the credibility of businesses committed to genuine sustainability efforts, positioning them favorably in competitive markets.

Fourth, it is demonstrated a strong commitment to sustainability. By adopting robust measures to secure and verify the origin of energy used in products, businesses showcase their dedication to transparent environmental practices. This proactive approach not only enhances credibility in the eyes of consumers, regulators, and stakeholders but also aligns with global efforts towards achieving sustainable development goals. It positions organizations as leaders in environmental responsibility, fostering a positive reputation and competitive advantage in markets increasingly prioritizing sustainability initiatives.

Fifth, customer trust and reputation, which are crucial business benefits, are enhanced. By ensuring the authenticity and transparency of energy origin labels, manufacturers bolster their credibility as trustworthy providers committed to sustainable practices. This builds stronger relationships with environmentally conscious consumers who value transparency and integrity in product sourcing. Moreover, a positive reputation for sustainability can attract new customers, differentiate the brand in competitive markets, and increase customer loyalty.

Sixth, it is enabled to ensure compliance with security standards and requirements, which offers significant business benefits. By adhering to established security protocols and regulations, manufacturers demonstrate their commitment to protecting sensitive energy origin data from tampering or misuse. This compliance enhances trust among customers, partners, and regulatory bodies, ensuring that the power origin labeling process meets rigorous security standards. Moreover, adherence to these standards mitigates risks associated with data breaches or fraudulent activities, protecting the company's reputation and minimizing potential legal and financial liabilities.

According to several examples of the present disclosure, the method may further comprise bounding the hardware-protected storage to the device.

Hence, only the device may access the hardware-protected storage, in particular may access data stored in the hardware-protected storage and/or may store data in the hardware-protected storage. Thus, security is further increased.

According to several examples of the present disclosure, the implementing may comprise implementing the power origin labeling algorithm in the TEE to have exclusive access to the signing keys.

By the term "exclusive" it is meant, for example, that only the power origin labeling algorithm may access the signing keys.

Hence, only the power origin labeling algorithm may access the signing keys, in particular may use and/or read the signing keys or (re)generate signing keys. Thus, security is further increased.

According to several examples of the present disclosure, the storing may further comprise: storing power origin labeling metadata in the hardware-protected storage that are to be used by the power origin labeling algorithm to prove a correct computation of the power origin labels; and exclusively accessing the power origin labeling metadata by the power origin labeling algorithm implemented in the TEE.

By the term "exclusive" it is meant, for example, that only the power origin labeling algorithm may access the power origin labeling metadata.

Hence, reliability and trustworthiness of the power origin labels is further increased in that the usage of the power origin labeling metadata is secured and protected, for example in that only the power origin labeling algorithm may access, i.e. use and/or read, the power origin labeling metadata.

According to several examples of the present disclosure, the verifying may comprise, for verification of the power origin labeling algorithm, measuring by the remote attestation mechanism an integrity of a program code of the power origin labeling algorithm.

It should be noted that the measuring the integrity of the program code of the power origin labeling algorithm may be realized by using existing implementations of remote attestation. For example, by using a computed cryptographic hash value over the program code and using a signed cryptographic hash value as well as a nonce from the external party with a device-dependent signing key.

Hence, reliability, trustworthiness, security and protection of a verification process is further increased.

According to several examples of the present disclosure, the method may further comprise transmitting a result of the verification or of the measured integrity to an external party for comparing the result with an a priori known reference result.

Hence, reliability, trustworthiness, security and protection of a verification process is further increased.

According to a third aspect, there is provided a device for generating power origin labels with increased security in an industrial context. The device comprises a hardware-protected storage for storing signing keys that are bound to the device and that are to be used by a power origin labeling algorithm for calculating the power origin labels. The device comprises a trusted execution environment (TEE) in which the power origin labeling algorithm is implemented and/or executed. The device comprises a remote attestation mechanism for an external party to verify the power origin labeling algorithm and/or the device.

It should be noted that same terms and/or expressions used for defining the device according to the third aspect that are also used for defining the method according to the first aspect are to be understood in a same way.

According to a fourth aspect, there is provided a data processing device. The data processing device comprises one or more processors being configured to carry out the method of the second aspect.

According to a fifth aspect, there is provided a data processing system. The data processing system comprising a device of the third aspect and/or a device of the fourth aspect. Additionally or alternatively, the data processing system comprises means for carrying out the method of the first aspect and/or the method of the second aspect.

According to a sixth aspect, there is provided an industrial plant comprising a device of the third aspect and/or a device of the fourth aspect. Additionally or alternatively, the industrial plant comprises a data processing system of the fifth aspect.

By "industrial plant", according to several examples, it may be meant an industrial plant, autonomous industrial plant or industrial production plant, comprising one or more pipelines, production lines and/or assembly lines for transforming one or more educts into a product and/or for assembling one or more components into a final product for example. According to several examples, it may be meant an industrial plant in oil industry, in gas industry, in mining industry, in chemical industry, in wind and power industry, or in food and beverage industry.

According to a seventh aspect, there is provided a computer-readable medium comprising instructions which, when executed by a computing system, cause the computing system to perform the method of the first aspect and/or the method of the second aspect. The computer-readable medium may be transitory or non-transitory, volatile or non-volatile.

According to an eighth aspect, there is provided a computer program product comprising instructions which, when executed by a computing system, enable or cause the computing system to perform the method of the first aspect and/or of the second aspect. The computer program product may comprise a computer-readable medium comprising instructions of the computer program product.

According to a ninth aspect, there is provided a use of at least one of a device of the third aspect, a device of the fourth aspect, a data processing system of the fifth aspect, an industrial plant of the sixth aspect, a computer-readable medium of the seventh aspect, and a computer program product of the eighth aspect.

Each of the third aspect to the ninth aspect is advantageous in several ways.

First, protecting the power origin labeling process, for example by the hardware-protected storage that comprises the signing keys and/or by implementing the power origin labeling algorithm in the TEE, ensures that the power origin labeling algorithm remains secure and untampered throughout its execution. This protection prevents any external entity from modifying or accessing the algorithm, and allows for maintaining the algorithm's integrity and confidentiality. Once set up, the power origin labeling process is immune to manipulation and an attacker can only halt its execution but cannot alter its operations. This also protects the secrets used in generating and protecting power origin labels, thereby preserving the authenticity and trustworthiness of the labels by facilitating a secure operation. Moreover, this feature protects the intellectual property of the power origin labeling algorithms, thereby creating a substantial barrier against competitors attempting to clone or replicate them. By securing the labeling process and ensuring its verifiability, this enhances the reliability and business value of the power origin labels, fostering greater trust among customers, auditors, and regulatory agencies.

Second, the secure verifiability, enabled by the remote attestation mechanism, ensures that auditors can establish trust in the power origin labelling process, knowing it has remained untampered with, which is a critical aspect for securing the origin labels themselves. Auditors are empowered to verify the accuracy and authenticity of the entire power origin labeling process. This verification capability can occur dynamically during operation, allowing audits to be conducted at any time and with flexible frequency. It enables auditors or third parties to confirm that the power origin labeling algorithm operates on the designated device, remains untampered, and executes on authorized hardware, thereby reinforcing trust in the integrity of the labeling process.

Third, there is provided a significant benefit by preventing greenwashing in power origin labeling. By ensuring the integrity and verifiability of energy data, it protects against deceptive practices that misrepresent products' environmental credentials. This transparency not only builds trust with consumers but also enhances the credibility of businesses committed to genuine sustainability efforts, positioning them favorably in competitive markets.

Fourth, it is demonstrated a strong commitment to sustainability. By adopting robust measures to secure and verify the origin of energy used in products, businesses showcase their dedication to transparent environmental practices. This proactive approach not only enhances credibility in the eyes of consumers, regulators, and stakeholders but also aligns with global efforts towards achieving sustainable development goals. It positions organizations as leaders in environmental responsibility, fostering a positive reputation and competitive advantage in markets increasingly prioritizing sustainability initiatives.

Fifth, customer trust and reputation, which are crucial business benefits, are enhanced. By ensuring the authenticity and transparency of energy origin labels, manufacturers bolster their credibility as trustworthy providers committed to sustainable practices. This builds stronger relationships with environmentally conscious consumers who value transparency and integrity in product sourcing. Moreover, a positive reputation for sustainability can attract new customers, differentiate the brand in competitive markets, and increase customer loyalty.

Sixth, it is enabled to ensure compliance with security standards and requirements, which offers significant business benefits. By adhering to established security protocols and regulations, manufacturers demonstrate their commitment to protecting sensitive energy origin data from tampering or misuse. This compliance enhances trust among customers, partners, and regulatory bodies, ensuring that the power origin labeling process meets rigorous security standards. Moreover, adherence to these standards mitigates risks associated with data breaches or fraudulent activities, protecting the company's reputation and minimizing potential legal and financial liabilities.

Optional features of the first aspect and/or of the second aspect may form part of any of the third aspect to ninth aspect, mutatis mutandis.

The computer-readable medium of the seventh aspect may have stored thereon the computer program product of the eighth aspect.

The term "obtaining", as used herein, may comprise, for example, receiving from another system, apparatus, device or process; receiving via an interaction with a user; loading or retrieving from storage or memory; measuring or capturing using sensors or other data acquisition devices, receiving or acquiring as a result from one or more data processing steps.

The indefinite article "a" or "an" does not exclude a plurality. In addition, the articles "a" and "an" as used herein should generally be construed to mean "one or more" unless specified otherwise or clear from the context to be directed to a singular form.

Unless specified otherwise, or clear from the context, the phrases "one or more of A, B and C", "at least one of A, B, and C", and "A, B and/or C" as used herein are intended to mean all possible permutations of one or more of the listed items. That is, the phrase "A and/or B" means (A), (B), or (A and B), while the phrase "A, B, and/or C" means (A), (B), (C), (A and B), (A and C), (B and C), or (A, B, and C).

The term "comprising" does not exclude other elements or steps. Furthermore, the terms "comprising", "including", "having" and the like may be used interchangeably herein.

The invention may include one or more aspects, examples or features in isolation or combination whether specifically disclosed in that combination or in isolation. Any optional feature or sub-aspect of one of the above aspects applies as appropriate to any of the other aspects.

The above-described aspects will become apparent from, and elucidated with, reference to the detailed description provided hereinafter.

### BRIEF DESCRIPTION OF THE DRAWINGS

A detailed description will now be given, by way of example only, with reference to the accompanying drawing, in which:
- Figure 1 illustrates a power origin labeling solution according to several examples of the present disclosure;
- Figure 2 illustrates a flowchart indicative of a method according to several examples of the present disclosure;
- Figure 3 illustrates a flowchart indicative of a method according to several examples of the present disclosure;
- Figure 4 illustrates a block diagram schematically showing a device for generating power origin labels according to several examples of the present disclosure; and
- Figure 5 illustrates a block diagram schematically showing a data processing device according to several examples of the present disclosure.

### DETAILED DESCRIPTION

According to several examples of the present disclosure, the present disclosure provides a solution for making the power origin labeling process secure and verifiable. For example to increase understandability and without being limited to that, such power origin labeling process as disclosed in document EP4481647 (which describes a technique to track and label the origin of energy data) may be extended by making the power origin labeling process secure and verifiable.

Therefore, according to various examples of the present disclosure, there is introduced a hardware-protected storage and a Trusted Execution Environment (TEE) to protect a power origin labeling algorithm as well as its secrets and data from unauthorized access and tampering. In addition, it is integrated a remote attestation mechanism that enables external parties to verify the integrity of the labeling process, to ensure that an attacker has not tampered with the algorithm or input data. This way, the present disclosure enables trust in the power origin labeling process, prevents greenwashing, allows to meet security standards and regulations, and enhances customer trust and manufacturer reputation.

For example to increase understandability and without being limited to that, document EP4481647 proposes a technique to track and label the origin of energy data. This document enables generating power origin labels indicating the sources of energy that have been used for the manufacturing of a product, for example, mix of renewable and non-renewable energy. While document EP4481647 specifies the power tracking and labeling algorithms and processes, it does not consider security aspects. However, ensuring the security and trustworthiness of the power origin labeling process is essential for its business value. Another drawback is that document EP4481647 does not enable power origin labels to be verifiable.

According to several examples of the present disclosure, to make the power origin labeling process secure and verifiable, the present disclosure provides a novel combination of security measures or security means, namely, (i) a hardware-protected storage for signing keys and, optionally, also for power origin metadata, (ii) a Trusted Execution Environment (TEE) running the power origin label algorithm and its protection mechanism, and (iii) a remote attestation mechanism to provide evidence about the trustworthiness of the power origin labeling process.

First, the hardware-protected storage may ensure that signing keys are unique and bound to a device generating power origin labels. This means signing keys are only accessible to the device and there are no means to exfiltrate signing keys or tamper with their usage. In the same manner, power origin metadata, which are used to prove the correct computation of power origin labels, are protected by hardware. Details on how the signing keys and power origin metadata may be used to provide trust and authenticity in the power origin labels do not form part of the present disclosure.

Second, a TEE may be employed, which is capable of protecting code and data on a device that generates the power origin labels. Nowadays, a broad range of devices, ranging from servers to small embedded systems, provide some form of TEE (for example without being limited to these examples, Intel SGX, Intel TDX, ARM TrustZone, AMD SEV). The TEE provides a shielded environment in which the power origin labeling algorithm is implemented and/or executed. This ensures that no other code on the device can interfere or tamper with the execution of the power origin labeling algorithm, even privileged code, for example, the operating system kernel.

Third, it may be implemented a remote attestation mechanism for the power origin labeling process. Remote attestation (for example as outlined in document Coker, G., Guttman, J., Loscocco, P. et al. Principles of remote attestation. Int. J. Inf. Secur. 10, 63-81 (2011). https://doi.org/10.1007/s10207-011-0124-7) allows an external party to check whether a remote system indeed runs a claimed software. According to several examples of the present disclosure, remote attestation may be used to enable external parties to verify that a power origin labeling device (i) indeed runs an untampered and up-to-date version of the power origin labeling code, and/or (ii) is a trustworthy device authorized to generate power origin labels. In this way, the power origin labeling process is made verifiable by external parties, which may be provided with an attest about the correct and trustworthy implementation and execution of the power origin labeling process.

In total, according to several examples of the present disclosure, the provided security measures secure the power origin labeling process, but also make the process externally verifiable, which provides several novel features and business benefits.

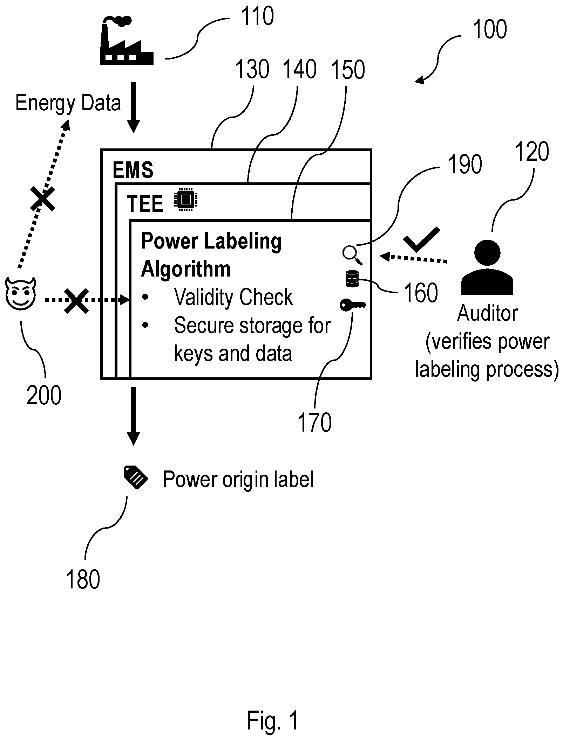

Referring now to Figure 1, Figure 1 illustrates a power origin labeling solution or process according to several examples of the present disclosure. Figure 1 schematically illustrates a system 100 which comprises a manufacturer or a manufacturing company 110, an external party 120, for example an auditor, and an energy management system (EMS) 130. The EMS 130 may comprise a device for generating power origin labels with increased security in an industrial context or at least part of the EMS 130 may be provided at, i.e. may run or may be executed at the device for generating power origin labels with increased security in an industrial context. The EMS 130 comprises a TEE 140, and a power labeling algorithm or power origin labeling algorithm 150 is provided in the TEE 140, i.e. the power origin labeling algorithm 150 is implemented and/or executed in the TEE 140. Thus, it may be understood that the device for generating power origin labels with increased security in an industrial context comprises the TEE 140. Further, as indicated in Figure 1, the EMS 130 or the device comprises a hardware-protected storage 160 for storing signing keys 170 that are bound to the device and that are to be used by the power origin labeling algorithm 150 for calculating one or more power origin labels 180. Moreover, as further indicated in Figure 1, the EMS 130 or the device comprises a remote attestation mechanism 190, for example for the external party 120 to verify the power origin labeling algorithm 150 and/or the device or the EMS 130.

The manufacturing company 110 inputs energy data to the EMS 130 or provides the energy data to the device for generating power origin labels with increased security in an industrial context. In doing so, the energy data may be input to the TEE 140 and/or may be stored in the hardware-protected storage 160. The energy data may comprise power origin labeling metadata. The power origin labeling algorithm 150 may use the energy data, and optionally also the power origin labeling metadata, to calculate the one or more power origin labels 180 that may then be provided as output from the EMS 130 or from the device.

For example, to increase understandability, it may be assumed herewith without limitation that the manufacturing company 110 produces a certain product A. To obtain this product A, several different processing steps S1, S2 and S3 are to be executed. In these processing steps S1, S2 and S3, several different starting materials B and C, as well as several different pre-products and components D and E are processed in a predetermined workflow. For the step S1, an energy amount E1 may be needed, for the step S2, an energy amount E2 may be needed, and for the step S3, an energy amount E3 may be needed. E1 may comprise an energy mix M1, E2 may comprise an energy mix M2, and E3 may comprise an energy mix M3. For example, M1 may comprise 100% renewable energy, M2 may comprise 100% fossil energy, i.e. energy from fossil fuels, and M3 may comprise 50% renewable energy and 50% energy from fossil fuels. The energy data that are provided by the manufacturing company 110 may comprise all these data/information E1 to E3 and M1 to M3. The power origin labeling algorithm 150 may then use all these data/information E1 to E3 and M1 to M3 to calculate one or more power origin labels 180 for the certain product A. The external party 120 may verify the calculation of the one or more power origin labels 180 for the certain product A.

It is further indicated in Figure 1 that due to the security measures taken, it is not possible for an attacker 200 to manipulate the power origin labeling algorithm 150 or to manipulate the energy data.

It shall be noted that in the present disclosure, it is focused on protecting the power origin labeling process, i.e., it is focused on providing a certain combination of different security measures to protect the process of the generation or calculation of the power origin labels 180. This is achieved, for example, by the usage of keys (signing keys 170) to generate signed power origin labels (power origin labels 180).

In the following, the security measures as illustrated according to Figure 1 are outlined in more detail.

According to several examples of the present disclosure, there is employed a hardware-protected storage 160 and a TEE 140 to protect the power origin labeling code, data, and secrets. It shall be noted that the hardware-protected storage 160 and/or the TEE 140 is/are not limited to a particular hardware technology and it is therefore omitted to describe hardware-dependent features. Rather, it is specified the required properties and configuration of the secure storage and execution environment. In general, keys or signing keys 170 need to be stored in a hardware-protected key storage (for example the hardware-protected storage 160). The storage should be bound to a device (i.e. the power origin labeling device, for example the device for generating power origin labels with increased security in an industrial context as mentioned above) that executes the power origin label process and should protect private keys from being importable or exportable from the device. Instead, keys can only be generated on the device itself, for example during bootstrapping, and afterwards used by the device. While the private signing key is kept secret and protected, the public part of the signing key can be known to other parties (for example the external party 120), including any entity that aims to verify the power origin labels.

According to several examples of the present disclosure, the power origin labeling code is implemented and/or executed inside a TEE 140. Only the power origin labeling code running inside the TEE 140 should have access to the hardware-protected key storage 160, meaning that no other code, even privileged kernel code, can use the power origin labeling key storage 160. Furthermore, power origin labeling metadata, which may be used to cross-check the plausibility of the generated power origin labels 180, may also be stored inside the TEE 140, protecting it to be modified by potential adversarial code running on the power origin labeling device.

According to several examples of the present disclosure, to make the power origin label process verifiable by others, it may be leveraged a security mechanism called remote attestation (remote attestation mechanism 190). The remote attestation mechanism 190 measures the integrity of the power origin labeling algorithm 150 running inside the TEE 140. One way of measuring the code could be computing a cryptographic hash value over the program code. The measurement either occurs at load-time or during runtime and aims at detecting any tampering with the power origin labeling algorithm 150. Afterwards, external verifying parties (for example the external party 120 as illustrated in Figure 1) can execute an interactive challenge-response protocol with the power origin labeling device to verify its software integrity. During protocol execution, the power origin labeling device may sign and transmit its software integrity measurements to the verifying party, for example, an external auditor. The verifying party may compare the received software integrity measurements with known-good measurements of the power origin labeling algorithm, which are a priori known to the verifying party, to determine whether the power origin labeling process has been tampered with. This verification mechanism can be executed at any time during the operation of the power origin labeling device. In this manner, the verifying party can determine that the power origin labeling device (i) indeed runs an untampered and up-to-date version of the power origin labeling code, and (ii) is a trustworthy device authorized to generate power origin labels.

Therefore, according to several examples of the present disclosure, there is provided protection of the power labeling process. In more detail, the herein-disclosed features of protecting the power origin labeling process ensure that the algorithm remains secure and untampered throughout its execution. This protection prevents any external entity from modifying or accessing the algorithm, maintaining its integrity and confidentiality. Once set up, the power origin labeling process is immune to manipulation and an attacker can only halt its execution but cannot alter its operations. This also protects the secrets used in generating and protecting power origin labels, thereby preserving the authenticity and trustworthiness of the labels by facilitating a secure operation. Moreover, these features protect the intellectual property of the power origin labeling algorithms, creating a substantial barrier against competitors attempting to clone or replicate them. By securing the labeling process and ensuring its verifiability, this disclosure enhances the reliability and business value of the power origin labels, fostering greater trust among customers, auditors, and regulatory agencies.

Moreover, according to several examples of the present disclosure, there is provided external verification of the power origin labeling process. In more detail, the features of secure verifiability ensure that auditors can confidently utilize energy data, knowing it has remained untampered with, which is a critical aspect for securing the origin labels themselves. Auditors are empowered to verify the accuracy and authenticity of the entire power origin labeling process. This verification capability can occur dynamically during operation, allowing audits to be conducted at any time and with flexible frequency. The features further enable auditors or third parties to confirm that the power origin labeling algorithm operates on the designated device, remains untampered, and executes on authorized hardware, thereby reinforcing trust in the integrity of the labeling process.

Furthermore, according to several examples of the present disclosure, greenwashing is prevented. In more detail, the present disclosure offers a significant business benefit by preventing greenwashing in power origin labeling. By ensuring the integrity and verifiability of energy data, it protects against deceptive practices that misrepresent products' environmental credentials. This transparency not only builds trust with consumers but also enhances the credibility of businesses committed to genuine sustainability efforts, positioning them favorably in competitive markets.

Additionally, according to several examples of the present disclosure, dedication to sustainability is shown. In more detail, the present disclosure demonstrates a strong commitment to sustainability. By adopting robust measures to secure and verify the origin of energy used in products, businesses showcase their dedication to transparent environmental practices. This proactive approach not only enhances credibility in the eyes of consumers, regulators, and stakeholders but also aligns with global efforts towards achieving sustainable development goals. It positions organizations as leaders in environmental responsibility, fostering a positive reputation and competitive advantage in markets increasingly prioritizing sustainability initiatives.

Further, according to several examples of the present disclosure, customer trust and reputation for producing manufacturer is enhanced. In more detail, enhancing customer trust and reputation is a crucial business benefit derived from implementing at least part of the solution as disclosed herein. By ensuring the authenticity and transparency of energy origin labels, manufacturers bolster their credibility as trustworthy providers committed to sustainable practices. This builds stronger relationships with environmentally conscious consumers who value transparency and integrity in product sourcing. Moreover, a positive reputation for sustainability can attract new customers, differentiate the brand in competitive markets, and increase customer loyalty.

Moreover, according to several examples of the present disclosure, there is provided compliance with security standards and requirements. In more detail, implementing at least part of the solution as disclosed herein can ensure compliance with security standards and requirements, which offers significant business benefits. By adhering to established security protocols and regulations, manufacturers demonstrate their commitment to protecting sensitive energy origin data from tampering or misuse. This compliance enhances trust among customers, partners, and regulatory bodies, ensuring that the power origin labeling process meets rigorous security standards. Moreover, adherence to these standards mitigates risks associated with data breaches or fraudulent activities, protecting the company's reputation and minimizing potential legal and financial liabilities.

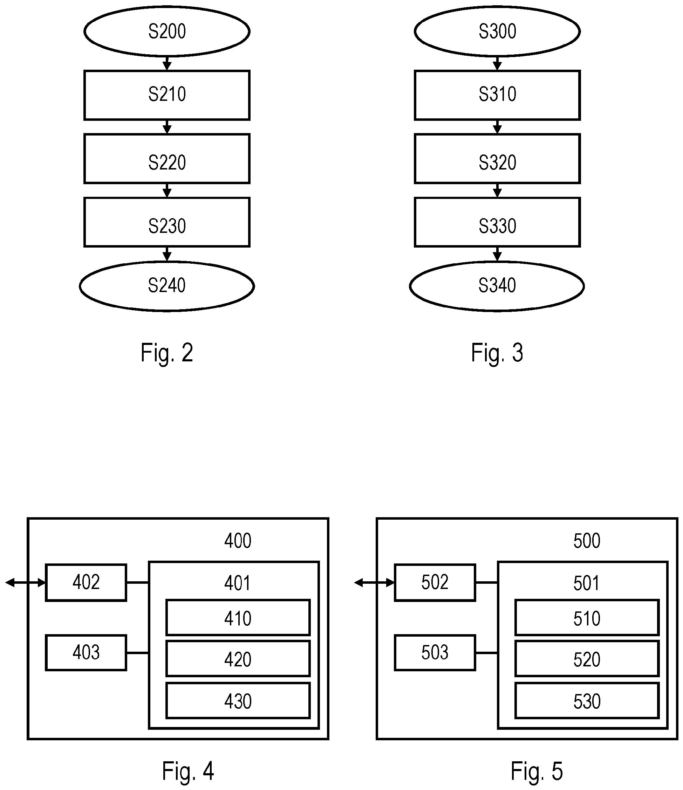

Referring now to Figure 2, Figure 2 illustrates a flowchart indicative of a method according to several examples of the present disclosure. The method is for enabling power origin labeling processing with increased security in an industrial context. The power origin labeling processing may be such processing as illustrated with reference to Figure 1. The method may be performed by such manufacturing company 110 as illustrated with reference to Figure 1. Hence, the manufacturing company 110 may also be understood as representing a service provider or application provider. However, it shall be noted that, alternatively, the method may also be performed by a third party, i.e. by a service provider or application provider that is different from the manufacturing company 110. For example, the third party may be a party that provides or hosts the EMS 130 as illustrated with reference to Figure 1 and/or that provides or hosts the power origin labeling device (i.e. the device for generating power origin labels with increased security in an industrial context) as outlined above with reference to Figure 1.

The method starts in S200.

In S210, the method comprises providing, at a device configured to generate power origin labels 180, a hardware-protected storage 160 for storing signing keys 170 that are bound to the device and that are to be used by a power origin labeling algorithm 140 for calculating the power origin labels 180. The device may be such power origin labeling device as outlined above with reference to Figure 1.

In S220, the method comprises providing, at the device, a TEE 140 for the power origin labeling algorithm 150 to be implemented and/or executed in the TEE 140.

In S230, the method comprises providing, at the device, a remote attestation mechanism 190 for an external party 120 to verify the power origin labeling algorithm 140 and/or the device.

The method ends in S240.

Referring now to Figure 3, Figure 3 illustrates a flowchart indicative of a method according to several examples of the present disclosure. The method is computer-implemented and is for securing power origin labeling processing in an industrial context. The power origin labeling processing may be such processing as illustrated with reference to Figure 1. The method may be performed by such manufacturing company 110 as illustrated with reference to Figure 1 and/or by such external party 120 as illustrated with reference to Figure 1 and/or by a third party. Hence, the manufacturing company 110 and/or the external party 120 may be understood as representing a service user or application user. This is outlined below in more detail.

The method starts in S300.

In S310, the method comprises storing, at a hardware-protected storage 160 provided at a device configured to generate power origin labels 180, signing keys 170 that are bound to the device and that are to be used by a power origin labeling algorithm 150 for calculating the power origin labels 180. The device may be such power origin labeling device as outlined above with reference to Figure 1. It shall be noted that the manufacturing company 110 or the third party may perform the storing.

In S320, the method comprises implementing and/or executing the power origin labeling algorithm 150 in a TEE 140 provided at the device. It shall be noted that the manufacturing company 110 or the third party may perform the implementing and/or the executing.

In S330, the method comprises verifying the power origin labeling algorithm 150 and/or the device by use of a remote attestation mechanism 190 provided at the device. It shall be noted that the external party 120 or the third party may perform the verifying.

The method ends in S340.

Referring now to Figure 4, Figure 4 shows a block diagram schematically illustrating a data processing device or device 400 for generating power origin labels according to several examples of the present disclosure. In particular, according to several examples of the present disclosure, there is provided a device 400 for generating power origin labels with increased security in an industrial context, as outlined above with reference to Figure 1.

The device 400 comprises one or more processors 401 being configured to carry out the method as outlined above with reference to Figure 2.

According to several examples of the present disclosure, the device 400 may comprise means to function and/or run such EMS 130 as outlined above with reference to Figure 1.

In more detail, according to various examples, a device 400 being configured to carry out the method of Figure 2 may comprise a processing circuitry, a processing function, a processing means, a processing unit or a processor 401, which enables the device 400 to participate in generating power origin labels with increased security in an industrial context. The processor 401 may comprise one or more processing portions or functions, wherein the processing portions or functions may be provided as one or more physical or virtual entities. The device 400 may comprise one or more communication interfaces 402. The device 400 may further comprise a memory or memory unit 403 for storing data, programs and/or instructions to be executed by the processor. The memory 403 may be a memory internal to the device 400 or may be a memory external to the device 400, for example at a cloud server. The processor 401 may comprise one or more portions, which enable the device 400 to execute the method of Figure 2 for example. According to several examples of the present disclosure, a providing portion 410 may be configured to perform such providing according to S210 of Figure 2, a providing portion 420 may be configured to perform such providing according to S220 of Figure 2, and a providing portion 430 may be configured to perform such providing according to S230 of Figure 2.

According to several examples of the present disclosure, the respective portions of the device 400 may also be understood as means for carrying out the certain function.

According to several examples of the present disclosure, there may be provided a device for generating power origin labels with increased security in an industrial context. The device may comprise a processing circuitry, a processing function, a processing means, a processing unit or a processor, which enables the device to participate in generating power origin labels with increased security in an industrial context. The processor may comprise one or more processing portions or functions, wherein the processing portions or functions may be provided as one or more physical or virtual entities. The device may comprise one or more communication interfaces. The device may further comprise a memory or memory unit for storing data, programs and/or instructions to be executed by the processor. The device may comprise a hardware-protected storage, a trusted execution environment and a remote attestation mechanism. The hardware-protected storage may be for storing signing keys that are bound to the device and that are to be used by a power origin labeling algorithm for calculating the power origin labels. The trusted execution environment, TEE, in which the power origin labeling algorithm may be implemented and/or executed. The remote attestation mechanism may be for an external party to verify the power origin labeling algorithm and/or the device.

Referring now to Figure 5, Figure 5 shows a block diagram schematically illustrating a data processing device or device 500 for generating power origin labels according to several examples of the present disclosure. In particular, according to several examples of the present disclosure, there is provided a device 500 for securing power origin labeling processing in an industrial context, as outlined above with reference to Figure 1. The device 500 comprises one or more processors 501 being configured to carry out the method as outlined above with reference to Figure 3.

According to several examples of the present disclosure, the device 400 may comprise means to function and/or run such EMS 130 as outlined above with reference to Figure 1.

In more detail, according to various examples, a device 500 being configured to carry out the method of Figure 3 may comprise a processing circuitry, a processing function, a processing means, a processing unit or a processor 501, which enables the device 500 to participate in securing power origin labeling processing in an industrial context. The processor 501 may comprise one or more processing portions or functions, wherein the processing portions or functions may be provided as one or more physical or virtual entities. The device 500 may comprise one or more communication interfaces 502. The device 500 may further comprise a memory or memory unit 503 for storing data, programs and/or instructions to be executed by the processor. The memory 503 may be a memory internal to the device 500 or may be a memory external to the device 500, for example at a cloud server. The processor 501 may comprise one or more portions, which enable the device 500 to execute the method of Figure 3 for example. According to several examples of the present disclosure, a storing portion 510 may be configured to perform such storing according to S310 of Figure 3, an implementing and/or executing portion 520 may be configured to perform such implementing and/or executing according to S320 of Figure 3, and a verifying portion 530 may be configured to perform such verifying according to S330 of Figure 3.

According to several examples of the present disclosure, the respective portions of the device 500 may also be understood as means for carrying out the certain function.

According to several examples of the present disclosure, there is provided a data processing system for power origin labeling processing in an industrial context. The data processing system comprises the device 400 according to Figure 4 and/or the device 500 according to Figure 5. Additionally or alternatively, the data processing system comprises means for carrying out the method according to Figure 2 and/or Figure 3. The data processing system may be such system 100 as illustrated with reference to Figure 1.

According to several examples of the present disclosure, there is provided an industrial plant comprising the device 400 according to Figure 4, the device 500 according to Figure 5 and/or the data processing system as outlined above. The industrial plant may be the industrial plant on which a certain product is produced for which (i.e. for the production of which) power origin labels are calculated.

According to several examples of the present disclosure, there is provided a computer-readable medium comprising instructions which, when executed by a computing system, causes the computing system to perform the method as outlined with reference to Figure 2 and/or Figure 3. The computer-readable medium may be transitory or non-transitory, volatile or non-volatile.

According to several examples of the present disclosure, there is provided a computer program product comprising instructions which, when executed by a computing system, enable or cause the computing system perform the method as outlined with reference to Figure 2 and/or Figure 3. The computer program product may comprise a computer-readable medium comprising instructions of the computer program product. The computer-readable medium as mentioned above may have stored thereon the computer program product.

According to several examples of the present disclosure, there is provided a use of at least one of the device 400, the device 500, the data processing system as outlined above, the industrial plant as outlined above, the computer-readable medium as outlined above, and the computer program product as outlined above. In particular, there is provided use of the method as outlined with reference to Figure 2 to enable power origin labeling processing with increased security in an industrial context, and there is provided use of the method as outlined with reference to Figure 3 to secure power origin labeling processing in an industrial context.

Optional features of the method(s) as outlined with reference to any one of Figures 1 to 3 may form part of the device 400, the device 500, the data processing system, the industrial plant, the computer-readable medium, the computer program product, and the use, mutatis mutandis.

Any unit, module, circuitry or methodology described herein may be implemented using hardware, software, and/or firmware configured to perform any of the operations described herein. Hardware may comprise one or more processor cores, field-programmable gate arrays (FPGAs), application-specific integrated circuits (ASICs), application-specific standard products (ASSPs), system-on-a-chip systems (SOCs), complex programmable logic devices (CPLDs), etc. Software may be embodied as a software package, code, instructions, instruction sets and/or data recorded on at least one transitory or non-transitory computer readable storage medium. Firmware may be embodied as code, instructions or instruction sets and/or data hard-coded in memory devices (e.g., non-volatile memory devices).

If implemented in software, the functions can be stored on or transmitted over as one or more instructions or code on a computer-readable medium. Computer-readable media include computer-readable storage media. Computer-readable storage media can be any available storage media that can be accessed by a computer. By way of example, and not limitation, such computer-readable storage media can comprise FLASH storage media, RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal may be included within the scope of computer-readable storage media. Computer-readable media also includes communications media including any medium that facilitates transfer of a computer program from one place to another. A connection, for instance, can be a communications medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communications medium. Combinations of the above should also be included within the scope of computer-readable media.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features.

It has to be noted that embodiments of the invention are described with reference to different categories. In particular, some examples are described with reference to methods whereas others are described with reference to devices. However, a person skilled in the art will gather from the description that, unless otherwise notified, in addition to any combination of features belonging to one category, also any combination between features relating to different category is considered to be disclosed by this application. However, all features can be combined to provide synergetic effects that are more than the simple summation of the features.

While the invention has been illustrated and described in detail in the drawings and foregoing description, such illustration and description are to be considered exemplary and not restrictive. The invention is not limited to the disclosed embodiments. Other variations to the disclosed embodiments can be understood and effected by those skilled in the art, from a study of the drawings, the disclosure, and the appended claims.

The mere fact that certain measures are recited in mutually different dependent claims does not indicate that a combination of these measures cannot be used advantageously.

Any reference signs in the claims should not be construed as limiting the scope.

## Claims

1. A method for enabling power origin labeling processing with increased security in an industrial context, the method comprising:
- providing (S210), at a device configured to generate power origin labels, a hardware-protected storage for storing signing keys that are bound to the device and that are to be used by a power origin labeling algorithm for calculating the power origin labels;
- providing (S220), at the device, a trusted execution environment, TEE, for the power origin labeling algorithm to be implemented and/or executed in the TEE; and
- providing (S230), at the device, a remote attestation mechanism for an external party to verify the power origin labeling algorithm and/or the device.

2. The method according to claim 1,
wherein the providing the hardware-protected storage for storing the signing keys further comprises bounding the hardware-protected storage to the device.

3. The method according to claim 1 or 2,
wherein the providing the hardware-protected storage for storing the signing keys further comprises providing to the power origin labeling algorithm implemented in the TEE exclusive access to the signing keys.

4. The method according to any of claims 1 to 3,
wherein the providing the hardware-protected storage for storing the signing keys further comprises:
- providing the hardware-protected storage for further storing power origin labeling metadata that are to be used by the power origin labeling algorithm to prove a correct computation of the power origin labels; and
- providing to the power origin labeling algorithm implemented in the TEE exclusive access to the power origin labeling metadata.

5. The method according to any of claims 1 to 4, wherein the providing the remote attestation mechanism comprises providing the remote attestation mechanism to measure, for verification of the power origin labeling algorithm, an integrity of a program code of the power origin labeling algorithm.

6. The method according to any of claims 1 to 5, wherein the providing the remote attestation mechanism comprises providing a result of the verification or of the measured integrity to be transmitted to the external party for comparing the result with an a priori known reference result.

7. A computer-implemented method for securing power origin labeling processing in an industrial context, the method comprising:
- storing (S310), at a hardware-protected storage provided at a device configured to generate power origin labels, signing keys that are bound to the device and that are to be used by a power origin labeling algorithm for calculating the power origin labels;
- implementing and/or executing (S320) the power origin labeling algorithm in a trusted execution environment, TEE, provided at the device; and
- verifying (S330) the power origin labeling algorithm and/or the device by use of a remote attestation mechanism provided at the device.

8. The method according to claim 7, further comprising bounding the hardware-protected storage to the device.

9. The method according to claim 7 or 8, wherein the implementing comprises implementing the power origin labeling algorithm in the TEE to have exclusive access to the signing keys.

10. The method according to any of claims 7 to 9, wherein the storing further comprises:
- storing power origin labeling metadata in the hardware-protected storage that are to be used by the power origin labeling algorithm to prove a correct computation of the power origin labels; and
- exclusively accessing the power origin labeling metadata by the power origin labeling algorithm implemented in the TEE.

11. The method according to any of claims 7 to 10, wherein the verifying comprises, for verification of the power origin labeling algorithm, measuring by the remote attestation mechanism an integrity of a program code of the power origin labeling algorithm by computing a cryptographic hash value over the program code.

12. A device for generating power origin labels with increased security in an industrial context, the device comprising:
- a hardware-protected storage for storing signing keys that are bound to the device and that are to be used by a power origin labeling algorithm for calculating the power origin labels;
- a trusted execution environment, TEE, in which the power origin labeling algorithm is implemented and/or executed; and
- a remote attestation mechanism for an external party to verify the power origin labeling algorithm and/or the device.

13. A data processing device (500) comprising one or more processors being configured to carry out the method according to any of claims 7 to 11.

14. A computer program product comprising instructions which, when executed by a computing system, enable and/or cause the computing system to perform the method according to any of claims 1 to 6 and/or to perform the method according to any of claims 7 to 11.

15. A computer-readable medium having stored thereon the computer program product according to claim 14.
